# EUROPÄISCHE PATENTSCHRIFT

(11) **EP 1 118 881 B1**
(45) Veröffentlichungstag und Bekanntmachung des Hinweises auf die Patenterteilung: **26.10.2005**
(21) Anmeldenummer: 00124550.5
(22) Anmeldetag: 09.11.2000
(51) Int. Cl.: G01V 8/12, G01V 3/12

(54) **Optoelektronische Sensoranordnung und Verfahren zum Betreiben einer optoelektronischen Sensoranordnung**
Opto-electronic sensor arrangement and method for driving an opto-electronic sensor arrangement
Dispositif capteur opto-électronique et procédé pour l'opération d'un dispositif capteur électronique

(30) Priorität: 20.01.2000 DE 10002319
(43) Veröffentlichungstag der Anmeldung: 25.07.2001
(73) Patentinhaber: SICK AG, 79183 Waldkirch, Breisgau (DE)
(72) Erfinder: Geiler, Martin, 77793 Gutach (DE)
(74) Vertreter: Manitz, Finsterwald & Partner GbR

(56) Entgegenhaltungen:
- EP-A- 0 345 361
- DE-A- 3 119 876
- US-A- 3 370 284
- US-A- 4 730 108
- US-A- 4 893 120

## Beschreibung

Die vorliegende Erfindung betrifft ein Verfahren zum Betreiben einer optoelektronischen Sensoranordnung, insbesondere einer Lichtschranke oder eines Lichtgitters, zur Feststellung von in einem Überwachungsbereich vorhandenen Gegenständen, bei dem von einem Sender nacheinander jeweils einen zeitlichen Abstand aufweisende Lichtpulse durch den Überwachungsbereich zu einem die Lichtpulse empfangenden Empfänger ausgesandt werden und in Abhängigkeit vom Vorhandensein eines Gegenstandes im Überwachungsbereich durch eine an dem Empfänger angeschlossene Auswerteeinheit ein Gegenstands-Feststellungssignal abgegeben wird.

Weiterhin ist die Erfindung auf eine Optoelektronische Sensoranordnung, insbesondere eine Lichtschranke oder ein Lichtgitter gerichtet, zur Feststellung von in einem Überwachungsbereich vorhandenen Gegenständen, mit zumindest einem Sender, mit dem jeweils einen zeitlichen Abstand zueinander aufweisende Lichtpulse nacheinander in den Überwachungsbereich aussendbar sind, und mit zumindest einem dem jeweiligen Sender zugeordneten Empfänger zum Empfangen der ausgesandten Lichtpulse sowie mit einer dem Empfänger nachgeschalteten Auswerteeinheit zur Abgabe eines Gegenstands-Feststellungssignal in Abhängigkeit vom Vorhandensein eines Gegenstandes im Überwachungsbereich.

In der EP 0 345 361 A1 wird ein Infrarotdetektor beschrieben, der eine Leuchtdiode zum Aussenden eines aus einem hochfrequenten und einem niederfrequenten Rechtecksignal kombinierten Signals und einen Lichtempfänger zum Empfangen und Auswerten des von der Leuchtdiode ausgesendeten Signals umfasst. Durch Variation der Frequenzen der Rechtecksignale kann der Detektor auf mehreren Kanälen betrieben werden. US 4,893,120 beschreibt einen Touchscreen mit einer Vielzahl von LEDs und Phototransistoren, wobei die Amplitude des emittierten Lichts der LEDs in Übereinstimmung mit einem vorgegebenen Muster moduliert wird. Insbesondere kann es sich bei dem emittierten Licht auch um eine Serie von Pulsen handeln, wobei jeder Puls wiederum mit einer vorbestimmten Frequenz moduliert ist.

Bisherige Pulsverfahren für optoelektronische Lichtschranken verwenden Pulssignale mit kleinem Puls/Pausenverhältnis der Lichtsignale. Damit werden große Reichweiten mit
- geringer Stromaufnahme des Senders
- geringe thermische Erwärmung der Sendetreiber und Sendedioden
- großer Signal-Rauschabstand am Empfänger
erreicht.

Bild 6 zeigt beispielhaft von einem Sender ausgesandte Lichtpulse, die in zeitlich unterschiedlichen Abständen ausgesandt werden. Grundsätzlich können die Lichtpulse auch zeitlich gleich große Abstände aufweisen oder es kann eine Lichtpulsserie kurz aufeinanderfolgender Lichtpulse ausgesandt werden, worauf jeweils eine längere Pause folgt. Bild 8 zeigt die Auswertefenster des Empfänger in Bezug zu den Sendepulsen. Eine Auswertung der empfangenen Signale findet nur für innerhalb der Auswertefenster empfangene Signale statt. Auf diese Weise werden Störsignale, die außerhalb der Auswertefenster empfange werden, unterdrückt. Der Empfänger synchronisiert nur auf optischem Weg mit dem Sender. Eine elektrische Synchronisation zwischen Sender und Empfänger besteht üblicherweise nicht.

Die Information über den Zustand "Lichtweg frei" bzw. "Lichtweg unterbrochen" wird durch Auswertung der Pulsflanken in den Auswertefenstern des Empfängers erhalten. Wenn der Lichtweg als unterbrochen erkannt wird, wird eine Gegenstands-Feststellungssignal erzeugt.

Nachteilig an diesem Verfahren ist es, daß schnelle optische Störsignale, die innerhalb der Auswertefenster auftreten, von der Auswerteeinheit fälschlicherweise als Lichtsignale aus dem zugeordneten Sender interpretiert werden. Dies führt zu verzögertem Abschalten der Schaltausgänge, bei einer Unterbrechung des Lichtwegs oder im schlimmsten Fall wird überhaupt kein Gegenstands-Feststellungssignal erzeugt . In Bild 7 sind beispielhaft Störimpulse dargestellt, die teilweise in die Auswertefenster fallen und somit auch bei unterbrochenem Lichtweg einen nicht unterbrochenen Lichtweg simulieren.

Besonders in sicherheitskritischen Anwendungen muß eine Verzögerung der Abschaltung oder ein fehlerhaftes Nichtabschalten vermieden werden. Eine Maßnahme, um diesem Nachteil zu begegnen ist die Erhöhung der Anzahl der Sendepulse, bei gleichzeitiger Erhöhung der empfangenen Pulsanzahl. Dies führt besonders bei vielstrahligen optischen Lichtgittern (z.B. Sicherheitslichtgittern) zu einer Erhöhung der Ansprechzeit. Dies ist unerwünscht.

Zur Vermeidung dieser Nachteile werden erfindungsgemäß ein Verfahren der eingangs genannten Art gemäß Anspruch 1 und eine optoelektronische Sensoranordnung gemäß Anspruch 4 geschaffen, und insbesondere der Sendepuls zusätzlich mit einem Wechsellichtsignal moduliert. Das Wechsellichtsignal ist dabei in Frequenz und/oder Phase und/oder Modulationsgrad dem Sender und dem zugeordneten Empfänger bekannt.

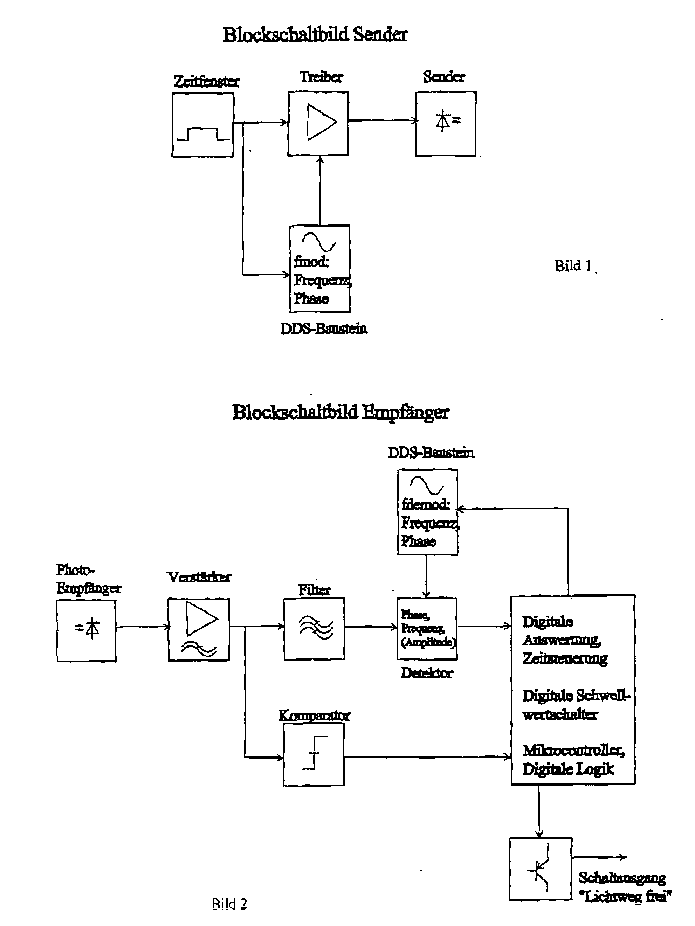

Bild 1 zeigt ein Blockschaltbild eines Senders, aus dem die Modulation des innerhalb eines Zeitfensters erzeugten Sendepulses durch einen DDS-(Direct Digital Synthese)-Baustein erfolgt, mit dem beispielsweise hochpräzise Sinusverläufe erzeugt werden können. Das modulierte Signal wird anschließend beispielsweise an eine Sendediode angelegt, wodurch ein entsprechend modulierter Lichtpuls ausgesandt wird.

Dies Auswertung des Empfangssignals erfolgt in zwei von einander unabhängigen Signalpfaden, wie es in Bild 2 dargestellt sind:
- mit dem Pulsdetektor (Komparator) werden die Lichtpulssignale auf ansteigende oder abfallende Lichtenergie bewertet. Dies entspricht dem aus dem Stand der Technik bekannten Verfahren.
- Mit dem Phasen- bzw. Frequenzdetektor und der nachfolgenden digitalen Auswertung wird das Empfangssignal auf das Vorhandensein des Modulationssignal untersucht.

Nur wenn das Modulationssignal in den empfangenen Lichtpulsen erkannt wird, gilt der Lichtweg als frei. Dabei kann je nach Anwendung der Lichtweg auch als frei angegeben werden, wenn das Modulationssignal nur in einem überwiegenden Teil und nicht in allen der empfangenen Lichtpulse erkannt wird. Das Ausgangssignal des Pulsdetektors (Komperators) kann zusätzlich für die Auswertung herangezogen werden.

Wird bereits vom Pulsdetektor kein Lichtpuls erkannt bzw. eine bestimmte Mindestmenge von erwarteten Lichtpulsen nicht erkannt, so gilt der Lichtweg als unterbrochen und es wird ein entsprechendes Gegenstands-Feststellungssignal erzeugt.

Die Erkennung des Modulationssignals erfolgt bevorzugt durch einen DDS-Baustein, mit dem beispielsweise hochpräzise Sinusverläufe erzeugt werden können. Vor der Demodulation kann das Empfangssignal noch einen Filter durchlaufen, mit dem von der Modulationsfrequenz verschiedene Frequenzen, die durch Störungen verursacht sind, ausgefiltert werden.

Die Auswerteeinheit kann eine digitale Auswertung, eine Zeitsteuerung, einen digitalen Schwellwertschalter, einen Mikrocontroller oder eine sonstige geeignete digitale Logik enthalten.

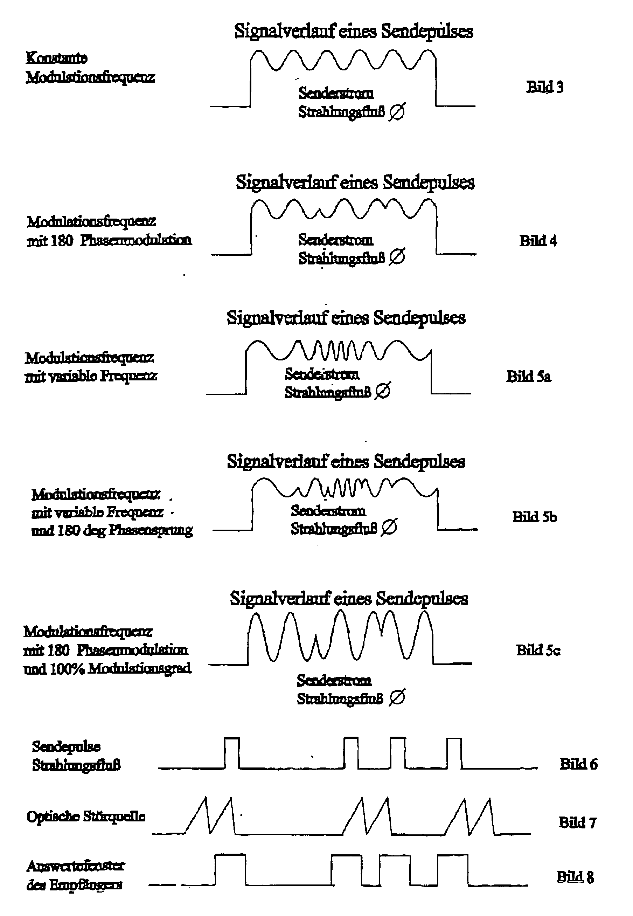

Bild 3 zeigt einen Sendepuls, der mit einem Signal mit konstanter Frequenz moduliert wurde. Der Empfänger bewertet die empfangene Frequenz auf Nulldurchgänge bzw. Modulationsgrad des Wechsellichtsignals. Erreicht der digitale Schwellwertschalter in Bild 2 die nötige Schwelle, so wird der Schaltausgang "Lichtweg frei" aktiviert.

Bei dem Sendepuls gemäß Bild 4 besitzt das verwendete Modulationssignal zusätzlich zur konstanten Frequenz eine Phasenumtastung (im Bild 4 wird die Phase um 0/180° umgetastet. Es sind auch beliebige andere Phasenlagen möglich). Diese Phasenumtastung wird im Empfänger ausgewertet. Typische konstante optische Störquellen zeigen an dieser Stelle keine Phasensprünge. Die Unterscheidung Störquelle vom zugeordneten Sender wird daher wesentlich präziser.

In Bild 5a wird das Modulationssignal in der Frequenz verändert. Dem Empfänger sind die Frequenzsprünge bekannt. Die Auswertung bewertet die Frequenzänderung.

In Bild 5b wird zusätzlich zur Änderung der Modulationsfrequenz die Phase (im Beispiel um 180°, andere Phasenlagen sind auch möglich) umgetastet.

Bild 5c zeigt die Verwendung eines Modulationssignals mit 180° Phasenumtastung und 100% Modulationsgrad. Natürlich kann auch hier zusätzlich die Frequenz variiert werden und es kann auch die Phasenumtastung entfallen.

Vorteile der Erfindung sind unter anderen:
a) Das Modulationssignal läßt sich als Synchronisationssignal verwenden. Die Synchronisation ist damit nicht nur im den ersten Strahl möglich, wie es im Stand der Technik üblich ist. Dadurch kann die Synchronisation auch bei Störungen im ersten Strahl aufrechterhalten werden.
b) Die zweikanalige (diversitäre) Auswertung der Lichtsignale durch unterschiedliche Signalpfade (Bild 2) für Puls und Modulationssignale lassen sicherheitstechnische unabhängige Bewertungen der Empfangssignale zu.
c) Durch Änderung der Modulationsfrequenz lassen sich Wechsellichtstörquelle eindeutig vom zugeordneten optischen Sender unterscheiden.
d) Durch Phasensprünge um z.B. 90° oder 180° werden Wechsellichtstörquellen mit konstanter Frequenz erkannt.
e) Wechselfremdlicht (Störungen) wird durch Filtermaßnahmen stark gedämpft (Bild 2). Die Modulationsfrequenz wird nicht gedämpft.
f) Einfache Nachregelung der Quarzungenauigkeit zwischen Sender und Empfänger. Da beide Einheiten nicht immer elektrisch miteinander synchronisiert sind, wird das Modulationssignal benutzt, um über die Phasenbewertung des Modulationssignals Unterschiede in internen Oszillatortoleranzen zu erkennen. Die Abweichung der realen Oszillatordifferenz kann dann im Empfänger ausgeglichen werden.

Die optoelektronische Sensoren werden bevorzugt für Lichtschranken und Lichtgitter eingesetzt. Dabei können diese im
- Einwegprinzip: Sender und Empfänger sind elektrisch getrennt, oder im
- Reflexprinzip: Sender und Empfänger im gleichen Gehäuse arbeiten.

Beim Reflexprinzip wird das ausgesandte Licht an einem Reflektor oder dergleichen zum Empfänger zurückreflektiert. Grundsätzlich kann die Vorrichtung auch als Lichttaster arbeiten, so daß das ausgesandte Lichtsignal im Zustand "Lichtweg frei" nicht vom Empfänger empfangen wird, und bei Eintreten eines Gegenstandes in den Überwachungsbereich das Licht von diesem zurück zum Empfänger reflektiert und dort erkannt wird. In diesem Fall wird das Gegenstands-Feststellungssignal beim Erkennen des Modulationssignals erzeugt.

Bei dem erfindurigsgemäßen modulierten Pulsverfahren können die Lichtpulse zusätzlich mit einem Modulationssignal mit
- konstanter Frequenz
- Phasenumtastung 0/180, 0/90/180/270 ° bzw. beliebiger Phase
- variabler Frequenz
- einem daraus kombinierten Verfahren (z.B. variable Frequenz und Phasenumtastung)
beaufschlagt werden. Der Modulationsgrad kann bis zu 100% betragen.

Die Modulationssignale können beliebige Form, insbesondere sinusförmig sein. Sie können auch als Rechtecksignale oder als Mischformen ausgebildet sein.

## Patentansprüche

1. Verfahren zum Betreiben einer optoelektronischen Sensoranordnung, insbesondere einer Lichtschranke oder eines Lichtgitters, zur Feststellung von in einem Überwachungsbereich vorhandenen Gegenständen, bei dem von einem Sender nacheinander jeweils einen zeitlichen Abstand aufweisende Lichtpulse durch den Überwachungsbereich zu einem die Lichtpulse empfangenden Empfänger ausgesandt werden und in Abhängigkeit vom Vorhandensein eines Gegenstandes im Überwachungsbereich durch eine an dem Empfänger angeschlossene Auswerteeinheit ein Gegenstands-Feststellungssignal abgegeben wird, wobei die Amplitude der Lichtpulse jeweils mit einem Wechsellichtsignal moduliert wird,
**dadurch gekennzeichnet, daß**
- das Empfangssignal in zwei unterschiedlichen, voneinander unabhängigen Signalpfaden ausgewertet wird, wobei
- in dem einen Signalpfad das Empfangssignal auf das Vorhandensein der Wechsellichtmodulation, und
- in dem anderen Signalpfad das Empfangssignal auf das Vorhandensein der Lichtpulse überprüft wird.

2. Verfahren nach Anspruch 1,
**dadurch gekennzeichnet,**
**daß** das Gegenstands-Feststellungssignal abgegeben wird, wenn zumindest für einen Teil der empfangenen Lichtpulse die Wechsellichtmodulation nicht detektiert wird.

3. Verfahren nach Anspruch 1 oder 2,
**dadurch gekennzeichnet,**
**daß** das Gegenstands-Feststellungssignal abgegeben wird, wenn zumindest für einen Teil der ausgesandten Lichtpulse kein entsprechender Lichtpuls empfangen wird.

4. Optoelektronische Sensoranordnung, insbesondere Lichtschranke oder Lichtgitter, zur Feststellung von in einem Überwachungsbereich vorhandenen Gegenständen, mit zumindest einem Sender, mit dem jeweils einen zeitlichen Abstand zueinander aufweisende Lichtpulse nacheinander in den Überwachungsbereich aussendbar sind, und mit zumindest einem dem jeweiligen Sender zugeordneten Empfänger zum Empfangen der ausgesandten Lichtpulse sowie mit einer dem Empfänger nachgeschalteten Auswerteeinheit zur Abgabe eines Gegenstands-Feststellungssignal in Abhängigkeit vom Vorhandensein eines Gegenstandes im Überwachungsbereich, insbesondere für ein Verfahren nach einem der vorhergehenden Ansprüche, wobei eine Modulationseinheit vorgesehen ist, mit der die Amplitude der Lichtpulse vor oder während des Aussendens jeweils mit einem Wechsellichtsignal modulierbar ist,
**dadurch gekennzeichnet, daß**
- die Auswertungschaltung zwei unterschiedliche, voneinander unabhängige Signalpfade umfasst, wobei
- der eine Signalpfad einen Phasen- und/oder Frequenzdetektor zum Detektieren der Wechsellichtmodulation in dem Empfangssignal, und
- der andere Signalpfad einen Pulsdetektor zum Detektieren der Lichtpulse in dem Empfangssignal aufweist.

## Claims

1. A method of operating an optoelectronic sensor arrangement, in particular a light barrier or a light grid, for the detection of objects present in a monitored zone, wherein light pulses respectively spaced in time are transmitted sequentially by a transmitter through the monitored zone to a receiver receiving the light pulses and an object detection signal is transmitted by an evaluation unit connected to the receiver in dependence on the presence of an object in the monitored zone, with the amplitude of the light pulses in each case being modulated by an alternating light signal,
**characterised in that**
- the received signal is evaluated in two different signal paths which are independent of one another; wherein
- the received signal is checked for the presence of the alternating light modulation in the one signal path; and
- the received signal is checked for the presence of the light pulses in the other signal path.

2. A method in accordance with claim 1, **characterised in that** the object detection signal is transmitted when the alternating light modulation is not detected for at least some of the received light pulses.

3. A method in accordance with claim 1 or claim 2, **characterised in that** the object detection signal is transmitted when no corresponding light pulse is detected for at least some of the transmitted light pulses.

4. An optoelectronic sensor arrangement, in particular a light barrier or a light grid, for the detection of objects present in a monitored zone, having at least one transmitter with which light pulses each spaced in time from one another can be transmitted sequentially into the monitored zone and having at least one receiver associated with the respective transmitter for the reception of the transmitted light pulses and having an evaluation unit connected downstream of the receiver for the transmission of an object detection signal in dependence on the presence of an object in the monitored zone, in particular for a method in accordance with any one of the preceding claims, wherein a modulation unit is provided with which the amplitude of the light pulses can be modulated using a respective alternating light signal before or during the transmission,
**characterised in that**
- the evaluation circuit includes two different signal paths which are independent of one another, wherein
- the one signal path has a phase detector and/or frequency detector for the detection of the alternating light modulation in the received signal; and
- the other signal path has a pulse detector for the detection of the light pulses in the received signal.

## Revendications

1. Procédé pour faire fonctionner un dispositif de détection optoélectronique, notamment un relais photoélectrique ou un réseau optique, destiné à la détection d'objets se trouvant dans une zone surveillée, dans lequel des impulsions lumineuses sont émises successivement par un émetteur à certains intervalles de temps à travers la zone surveillée vers un récepteur recevant les impulsions lumineuses, et un signal de détection d'objet est délivré par une unité d'évaluation raccordée au récepteur en fonction de la présence d'un objet dans la zone surveillée, l'amplitude des impulsions lumineuses étant à chaque fois modulée par un signal de lumière alternée,
**caractérisé en ce que**
- le signal de réception est évalué dans deux différents cheminements de signal indépendants l'un de l'autre,
- le signal de réception étant vérifié dans un cheminement de signal quant à la présence de la modulation par lumière alternée, et
- dans l'autre cheminement de signal, le signal de réception est vérifié quant à la présence des impulsions lumineuses.

2. Procédé selon la revendication 1,
**caractérisé en ce que**
le signal de détection d'objet est délivré lorsque la modulation par lumière alternée n'est pas détectée pour une partie au moins des impulsions lumineuses reçues.

3. Procédé selon la revendication 1 ou 2,
**caractérisé en ce que**
le signal de détection d'objet est délivré lorsqu'il n'est pas reçu d'impulsion lumineuse correspondante pour une partie au moins des impulsions lumineuses émises.

4. Dispositif de détection optoélectronique, notamment relais photoélectrique ou réseau optique, destiné à la détection d'objets se trouvant dans une zone surveillée, comportant au moins un émetteur, avec lequel des impulsions lumineuses successives peuvent être émises à certains intervalles de temps dans la zone surveillée, et au moins un récepteur associé à l'émetteur respectif pour la réception des impulsions lumineuses émises, ainsi qu'une unité d'évaluation disposée en aval du récepteur, destinée à délivrer un signal de détection d'objet en fonction de la présence d'un objet dans la zone surveillée, notamment pour un procédé selon l'une des revendications précédentes, une unité de modulation étant prévue, avec laquelle l'amplitude des impulsions lumineuses peut être modulée par un signal de lumière alternée avant ou pendant l'émission,
**caractérisé en ce que**
- le circuit d'évaluation comporte deux différents cheminements de signal indépendants l'un de l'autre,
- un cheminement de signal étant un détecteur de phase et/ou de fréquence pour la détection de la modulation par lumière alternée dans le signal de réception, et
- l'autre cheminement de signal étant un détecteur d'impulsions pour la détection des impulsions lumineuses dans le signal de réception.
